# EUROPÄISCHE PATENTSCHRIFT

(11) **EP 4 013 656 B1**
(45) Veröffentlichungstag und Bekanntmachung des Hinweises auf die Patenterteilung: **25.09.2024**
(21) Anmeldenummer: 20789506.1
(22) Anmeldetag: 01.10.2020
(51) Int. Cl.: B61D 17/18, B61D 17/12, F16B 5/06

(54) **BEFESTIGUNG FÜR EINE THERMISCHE ISOLIERSCHICHT IN EINEM SCHIENENFAHRZEUG IN INTEGRALBAUWEISE**
INTEGRAL FASTENING FOR A THERMAL INSULATION LAYER IN A RAIL VEHICLE
FIXATION INTÉGRALE POUR UNE COUCHE D'ISOLATION THERMIQUE DANS UN VÉHICULE FERROVIAIRE

(30) Priorität: 07.10.2019 AT 508432019
(43) Veröffentlichungstag der Anmeldung: 22.06.2022
(73) Patentinhaber: Siemens Mobility Austria GmbH, 1210 Wien (AT)
(72) Erfinder: IBANSCHITZ, Michael, 2443 Stotzing (AT); KUZDAS, Dominik, 1100 Wien (AT); MARSCHNER, Markus, 2351 Wiener Neudorf (AT)
(74) Vertreter: Siemens Patent Attorneys
(86) Internationale Anmeldenummer: PCT/EP2020/077551
(87) Internationale Veröffentlichungsnummer: WO 2021/069307

(56) Entgegenhaltungen:
- WO-A1-2007/008135
- WO-A1-2007/008135
- CN-U- 201 923 149
- DE-A1- 19 509 676
- DE-A1- 19 509 676
- DE-A1- 19 533 532
- DE-A1- 2 636 916
- DE-A1- 2 636 916
- JP-U- S58 132 754
- JP-U- S6 225 247
- US-A1- 2002 050 029

## Beschreibung

Befestigung für eine thermische Isolierschicht in einem Schienenfahrzeug in Integralbauweise.

### Technisches Gebiet

Die Erfindung betrifft eine Befestigung für eine thermische Isolierschicht in einem Schienenfahrzeug in Integralbauweise.

### Stand der Technik

Passagierschienenfahrzeuge sind heute fast ausschließlich mit einer thermischen Isolierung des Innenraums ausgestattet, wodurch der Energiebedarf zur Heizung bzw. Kühlung des Passagierraums deutlich reduziert wird. Weiters bietet eine solche Dämmung den Vorteil eines höheren Komforts für die Passagiere, da die Oberflächentemperatur des Passagierinnenraums näher an die Lufttemperatur des Innenraums gelangt. Die dabei eingesetzte Dämmung ist an der Innenseite der Wagenkastenstruktur, insbesondere der Seiten- und Stirnwände sowie dem Dach zu befestigen. Aus dem Stand der Technik sind eine Vielzahl an Befestigungsmöglichkeiten bekannt, welche jedoch alle ihre spezifischen Nachteile haben. Beispielsweise ist eine Verklebung der Dämmung für die typische Einsatzdauer eines Passagierschienenfahrzeugs von 40 Jahren nicht dauerhaft genug, da Klebstoffe für diesen Einsatzzweck sehr einfach verarbeitbar sein müssen, diese jedoch nicht die erforderliche Haltbarkeit aufweisen. Andere Befestigungsmittel sehen nagelartige Bauteile vor, welche an der Wagenkasteninnenwand angeordnet werden und an welchen die Dämmung aufgesteckt und mit tellerartigen Scheiben gesichert wird. Diese Befestigungsart stellt während des Montagevorgangs eine beträchtliche Unfallgefahr dar und wird daher eher vermieden. Eine einfach auszuführende und dauerhaltbare Befestigungsart besteht des Weiteren darin, die Isolierschicht (Dämm-Material) mittels Schnüre an den Wagenkasten zu binden. Allgemein ist es wünschenswert, die Befestigung der Isolierung möglichst während der Konstruktion des Schienenfahrzeugs so wenig wie möglich berücksichtigen zu müssen und auch möglichst keine zusätzlichen Bearbeitungsschritte wie Bohren oder Fräsen ausführen zu müssen und auch Schweißarbeiten für die Herstellung von Isolationsbefestigungen zu vermeiden. Werden Schienenfahrzeug in Integralbauweise hergestellt, bei welcher eine Mehrzahl an Leichtmetall-Strangpreßprofilen zu einer Großbaugruppe wie einer Seitenwand verbunden werden, so werden meist bereits eine Vielzahl an Befestigungsmöglichkeiten an diesen Profilen vorgesehen, beispielsweise in Form sogenannter C-Schienen. An diesen C-Schienen können beispielsweise Innenausbauteilen mittels Schraubverbindungen an in den C-Schienen geführten Gleitmuttern befestigt werden. An Stellen, an denen keine Befestigungen erforderlich sind, ist es gebräuchlich diese C-Schienen im Rahmen des Zusammenbaus wieder zu entfernen.

Somit können bei Fahrzeugen in Integralbauweise Isolierungen relativ einfach befestigt werden, jedoch bestehen bei bekannten Befestigungsarten die genannten Nachteile. Insbesondere sind alle Befestigungen nachteilig, zu deren Einsatz Werkzeuge erforderlich sind. zum technischen Umfeld wird beispielsweise auf die DE 195 09 676 A1 verwiesen.

### Darstellung der Erfindung

Der Erfindung liegt daher die Aufgabe zugrunde, eine Befestigung für eine thermische Isolierschicht anzugeben, welche einfach und werkzeuglos montierbar ist und deren Bauteile sehr kostengünstig herstellbar sind.

Die Aufgabe wird durch eine Befestigung für eine thermische Isolierschicht mit den Merkmalen des Anspruchs 1 und einer Isolierungshalterung nach Anspruch 7 gelöst. Vorteilhafte Ausgestaltungen sind Gegenstand untergeordneter Ansprüche. Dem Grundgedanken der Erfindung nach wird eine Befestigung für eine thermische Isolierschicht im Innenraum eines Schienenfahrzeugs in Integralbauweise beschrieben, welche mindestens eine, in Richtung des Innenraums des Schienenfahrzeugs orientierbare, geradlinige Ausformung und eine mit der Ausformung in formschlüssigen Eingriff bringbare Isolierungshalterung umfasst, wobei die Isolierungshalterung einen Klemmteil zum formschlüssigen Eingriff in die Ausformung und einen Halteteil zur Verteilung der Klemmkraft auf die Isolierschicht umfasst, und wobei zwischen dem Klemmteil und dem Halteteil ein Abstandsteil angeordnet ist. Dadurch ist der Vorteil erzielbar, eine Klemmung einer thermischen Isolierschicht herstellen zu können, welche äußerst einfach montierbar ist und deren Bauteile mit geringst möglichen Kosten herstellbar sind.

Erfindungsgemäß umfasst die Befestigung mindestens eine, in Richtung des Innenraums des Schienenfahrzeugs orientierte, geradlinige Ausformung sowie eine mit dieser Ausformung in Eingriff bringbare Isolierungshalterung. Diese Isolierungshalterung ist als eigener Bauteil ausgeführt, welcher vorzugsweise aus Kunststoff hergestellt ist und welcher einen Abschnitt (Klemmteil) aufweist, welcher mit der Ausformung in formschlüssigen Eingriff bringbar ist. Die Ausformung ist vorzugsweise als Teil eines der den Wagenkasten eines Schienenfahrzeugs bildenden Leichtmetall-Strangpreßprofile aufgebaut, sodass keinerlei getrennter Herstellungs- oder Montageaufwand für die Ausformung erforderlich ist. Die Ausformung wird dabei im Rahmen des Herstellungsprozesses eines Leichtmetallprofils hergestellt, wozu nur die Preßmatrize entsprechend geformt sein muß. Solcherart ist die Ausformung einstückig mit einem Leichtmetall-Strangpreßprofil des Wagenkastens des Schienenfahrzeugs formbar.

Besonders vorteilhaft ist es, die Ausformung als sogenannte C-Schiene auszubilden, bei welcher die Ausformung einen C-förmigen Querschnitt aufweist. Diese Ausführung bietet aufgrund der dabei auftretenden Hinterschneidung einen besonders guten Formschluß mit der Isolierungshalterung. Weiters kann eine Ausformung als C-Schiene auch zur Befestigung weiterer Bauteile mittels in Gleitmuttern eingreifender Schraubverbindungen herangezogen werden.

Eine weitere bevorzugte Ausführungsform der Ausformung sieht vor, diese mit I-förmigen Querschnitt mit einer Einkerbung auszubilden. Solcherart kann die Ausformung klein und leicht sein, dabei jedoch durch die Einkerbung einen guten Formschluß mit der Isolierungshalterung aufweisen.

Die Isolierungshalterung ist vorzugsweise aus Kunststoff herzustellen, wobei es insbesondere vorteilhaft ist, alle Abschnitte (Klemmteil, Abstandsteil und Halteteil) einstückig aus Kunststoff herzustellen. Je nach Ausführungsart der Isolierungshalterung kann dazu ein Spritzgußverfahren oder ein Extrusionsverfahren eingesetzt werden.

Die Isolierungshalterung kann auf zwei prinzipielle Arten ausgeformt sein. Gemäß einer ersten Art weist sie, ebenso wie die Ausformung einen linearen Verlauf auf und wird über eine bestimmte Länge auf die Ausformung gesteckt. Dabei hält sie die Isolierung über diese Länge und drückt sie an die Innenseite des Wagenkastens an. Diese Ausführungsart der Isolierungshalterung wird vorzugsweise mittels eines Extrusionsverfahrens hergestellt.

Die zweite Ausführungsart sieht eine punktförmige Ausbildung der Isolierungshalterung vor, bei welcher der Klemmteil sich nur über einen kurzen Abschnitt der Ausformung erstreckt und dort an dieser anklemmbar ist. Der Abstandsteil ist dabei stangenartig ausgebildet und der Halteteil ist plattenförmig geformt, um die Haltekraft über eine bestimmte Fläche der Isolierung zu verteilen. Diese Ausführungsart der Isolierungshalterung wird vorzugsweise mittels eines Spritzgußverfahrens hergestellt.

Bei jeder der genannten Ausführungsformen ist ein Klemmteil vorgesehen, welcher zum Eingriff mit der Ausformung in einem Leichtmetallprofil eines Wagenkastens ausgebildet ist, beispielsweise so, dass ein Eingriff in eine C-Schiene möglich ist. An diesen Klemmteil schließt ein Abstandsteil an, welcher je nach Dicke der zu klemmenden Isolierung unterschiedliche Länge aufweist und welcher bis zu dem daran anschließenden Halteteil reicht. Der Halteteil als plattenförmig ausgebildet die Haltekraft über eine bestimmte Fläche der Isolierung zu verteilen. Dabei ist es vorteilhaft, den Halteteil als rechteckige oder runde Platte auszuführen.

Erfindungsgemäß weist der Halteteil der Isolierungshalterung vier Armen auf, welche jeweils von dem Abstandsteil ausgehen und welche an ihrem Ende je mit einer Platte ausgestattet sind. Solcherart kann die Klemmung der Isolierung verbessert werden, da dabei die Klemmkraft auf eine größere Fläche verteilt wird. In Weiterentwicklung dieser Ausführungsform ist es empfehlenswert, die Arme mit je einer Sollbruchstelle auszustatten, sodass sie einfach und ohne Erfordernis eines Werkzeugs von dem Abstandsteil abtrennbar sind. Solcherart kann eine Isolierungshalterung mit vier Armen auch in begrenzten Bauräumen, insbesondere an den Rändern einer Isolierung eingesetzt werden, da anderenfalls einer der Arme die Montage an diesen Stellen verunmöglichen würde.

Eine weitere, bevorzugte Ausführungsform sieht vor, den Halteteil mit einer zapfenförmigen Ausformung auszustatten, an welcher eine konventionelle Isolierungsbefestigung mittels einer manuell gespannten Schnur zu ermöglichen. Solcherart kann zusätzlich zur Klemmung mittels der Isolierungshalterung eine Schnurklemmung, und somit eine noch bessere Verteilung der Klemmkraft an die Isolierung gewährleistet werden.

Eine weitere bevorzugte Ausführungsform der Erfindung sieht vor, die Isolierungshalterung Kunststoff herzustellen, und dabei den Abstandsteil in einen ersten und einen zweiten Abschnitt zu teilen und eine Rastung zwischen diesen ersten und dem zweiten Abschnitt einzufügen, welche das variable Einstellen der Länge des Abstandsteils zueinander erfolgen kann. Solcherart kann eine Isolierungshalterung für unterschiedliche Dicken von Isolierungen eingesetzt werden. Der Abstandsteil ist dabei in zwei Abschnitte geteilt, welche miteinander in Eingriff gebracht werden können und dabei zueinander verschiebbar sind, sodass die Länge des Abstandsteils variabel gestaltet ist. Es ist besonders vorteilhaft, eine Rastung zwischen dem ersten und dem zweiten Abschnitt vorzusehen, welche sägezahnartig ausgeführt ist und ein verkürzen des Abstandsteils leicht ermöglicht, aber eine Sperre gegen eine Verlängerung bewirkt. Somit bleibt die auf die Isolierung wirkende Klemmkraft zuverlässig zeitlich unbegrenzt und auch bei Vibrationen des Fahrzeugs erhalten. Diese Rastung kann im Rahmen der Herstellung der Isolierungshalterung durch einen Spritzgußprozess einfach mit hergestellt werden.

### Kurzbeschreibung der Zeichnungen

Es zeigen beispielhaft:
**Fig.1** Befestigung einer Isolierung, Schnitt.
**Fig.2** Isolierungshalterung.
**Fig.3** Befestigung einer Isolierung, Schrägansicht.
**Fig.4** Befestigung einer Isolierung, I-förmige Ausformung.
**Fig.5** Befestigung einer Isolierung, I-förmige Ausformung, Schnitt.
**Fig.6** Befestigung einer Isolierung, I-förmige Ausformung, Schrägansicht.

### Ausführung der Erfindung

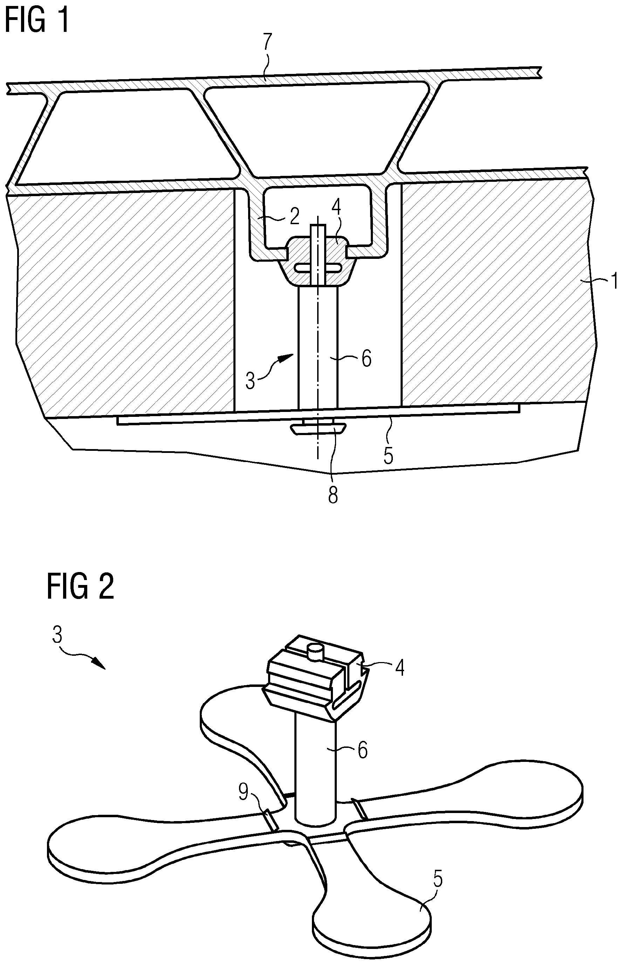

**Fig.1** zeigt beispielhaft und schematisch eine Befestigung einer Isolierung in einer Schnittdarstellung. Es ist ein Schnitt durch eine Wand eines Schienenfahrzeugs in Integralbauweise dargestellt, beispielsweise ein Dach. Das Schienenfahrzeug umfasst dabei ein Leichtmetall-Strangpreßprofil 7, welches als Hohlprofil ausgebildet ist und welches mit weiteren Profilen zusammengefügt eine der Großbaugruppen und weiters den Wagenkasten bildet. An der Innenseite des Wagenkastens, d.h. an der dem Innenraum zugewandten Seite des Leichtmetall-Strangpreßprofils 7 ist eine Ausformung 2 angeordnet, welche als Teil des Leichtmetall-Strangpreßprofils 7 ausgebildet ist und bei der Herstellung des Leichtmetall-Strangpreßprofils 7 mit hergestellt wird. Die Ausformung 2 ist als sogenannte C-Schiene ausgebildet und kann allgemein zur Befestigung von Innenausbauteilen herangezogen werden. An der Innenseite des Wagenkastens ist eine Isolierung 1 vorgesehen, welche an dieser Position befestigt ist. Dazu ist eine Isolierungshalterung 3 eingesetzt, welche drei Abschnitte umfasst: einen Klemmteil 4, welcher so ausgebildet ist, dass er in die Ausformung 2 eingreifen und in dieser formschlüssig gehalten werden kann; einen Halteteil 5, welcher die Isolierung 1 mit einer Klemmkraft beaufschlagt und diese Klemmkraft über eine bestimmte Fläche der Isolierung 1 verteilt; und einen Anstandsteil 6 zur Überbrückung des Weges zwischen dem Klemmteil 4 und dem Halteteil 5. Die Länge des Abstandteils 6 ist in Abhängigkeit von der Dicke der Isolierung 1 zu bestimmen. Es ist vorteilhaft, einen Abstandsteil 6 mit variabler Länge einzusetzen, welcher auf Isolierungen 1 in einem bestimmten Dickenbereich einstellbar ist. Des Weiteren ist die Isolierungshalterung 3 mit einer Schnurhalterung 8 an dem Halteteil 5 ausgestattet, welche es erlaubt, die Isolierung 1 zusätzlich mit einer, zwischen mehreren Isolierungshalterungen 3 gespannten Schnur zu fixieren.

**Fig.2** zeigt beispielhaft und schematisch eine Isolierungshalterung. Es ist ein Ausführungsbeispiel einer Isolierungshalterung 3 dargestellt, wie es bei Ausformungen 2 in Form einer C-Schiene zur Anwendung kommen kann und welches einen Halteteil 5 in Form von vier Armen aufweist. Bei diesem Ausführungsbeispiel ist der Halteteil 5 in Form von vier Armen ausgeführt, welche an ihrem Ende eine plattenförmige Vergrößerung aufweisen. Somit ist die Klemmkraft auf eine Isolierung 1 über eine größere Fläche verteilt. Zusätzlich ist in gezeigtem Ausführungsbeispiel eine Möglichkeit zur werkzeuglosen Abtrennung einzelner Arme des Halteteils 5 vorgesehen. Dazu ist jeder der Arme in der Nähe des Abstandsteils 6 mit einer Sollbruchstelle 9 ausgestattet. Dadurch kann eine gezeigte Isolierungshalterung 3 auch unter begrenzen Raumbedingungen, beispielsweise neben Innenausbauteilen eingesetzt werden, welche sonst mit dem Halteteil kollidieren würden. Es ist wesentlich, die Sollbruchstelle 9 so zu gestalten, dass ein Abtrennen eines Armes manuell und werkzeuglos erfolgen kann.

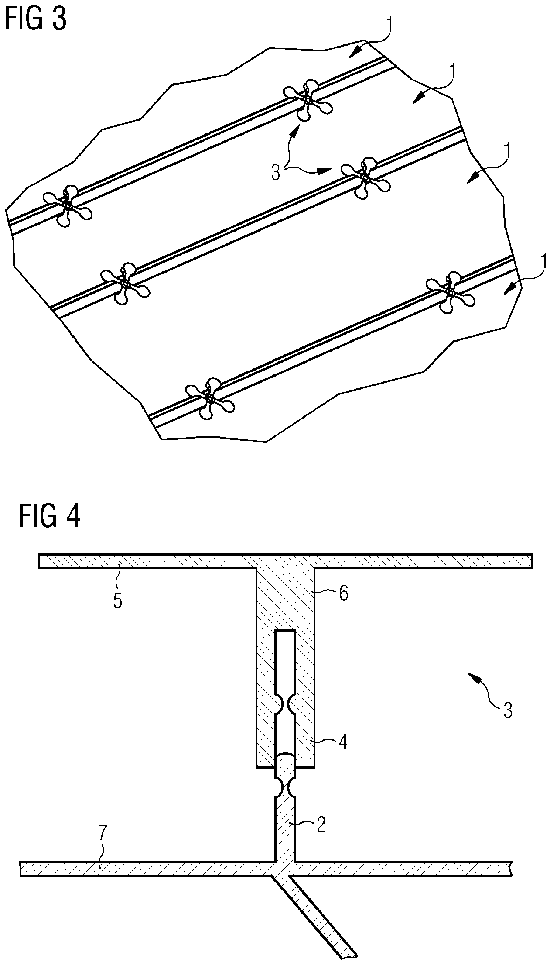

**Fig.3** zeigt beispielhaft und schematisch eine Befestigung einer Isolierung in einer Schrägansicht. Es ist die Ansicht auf eine befestigte Isolierung 1 dargestellt, wobei die Isolierung 1 in mehreren, zueinander parallelen Streifen aufgebaut ist. Zwischen diesen Streifen dieser Isolierung 1 sind in gleichmäßigen Abständen Isolierungshalterungen 3 angeordnet. Die Isolierungshalterungen 3 sind gemäß des in Fig.2 gezeigten Ausführungsbeispiels mit vier Armen ausgestattet, wobei jeweils zwei Arme die Isolierung 1 einer Seite fixieren.

**Fig.4** zeigt beispielhaft und schematisch Befestigung einer Isolierung an einer I-förmige Ausformung in einer Schnittdarstellung. Es ist eine Prinzipdarstellung einer Isolierungsbefestigung dargestellt, bei welcher eine Ausformung 2 mit I-förmigen Querschnitt eingesetzt ist. Die Ausformung 2 bildet, wie bei dem Ausführungsbeispiel aus Fig.1 einen integralen Bestandsteil eines Leichtmetall-Strangpreßprofils 7 und weißt einen I-förmigen Querschnitt mit einer Einkerbung auf. Eine Isolierungshalterung 3 ist wie in bereits gezeigten Ausführungsbeispielen mit einem Klemmteil 4, einem Halteteil 5 und einem Abstandsteil 6 aufgebaut, wobei der Halteteil 4 eine taschenförmige Ausnehmung umfasst, welche innen zum Eingriff in die Einkerbung der Ausformung 2 des Leichtmetall-Strangpreßprofils 7 ausgebildet ist. Solcherart ist eine formschlüssige Verbindung zwischen der Ausformung 2 und der Isolierungshalterung 3 gegeben. Die in diesem Ausführungsbeispiel zum Einsatz kommende Isolierungshalterung 3 wird vorzugsweise mittels eines Extrusionsverfahrens hergestellt. Der Formschluß zwischen der Ausformung 2 und dem Klemmteil 4 kann weiter verbessert werden, in dem die gezeigte Einkerbung mit runder Begrenzung durch eine Einkerbung mit gerader Begrenzung, insbesondere eine sägezahnartige Begrenzung ersetzt wird.

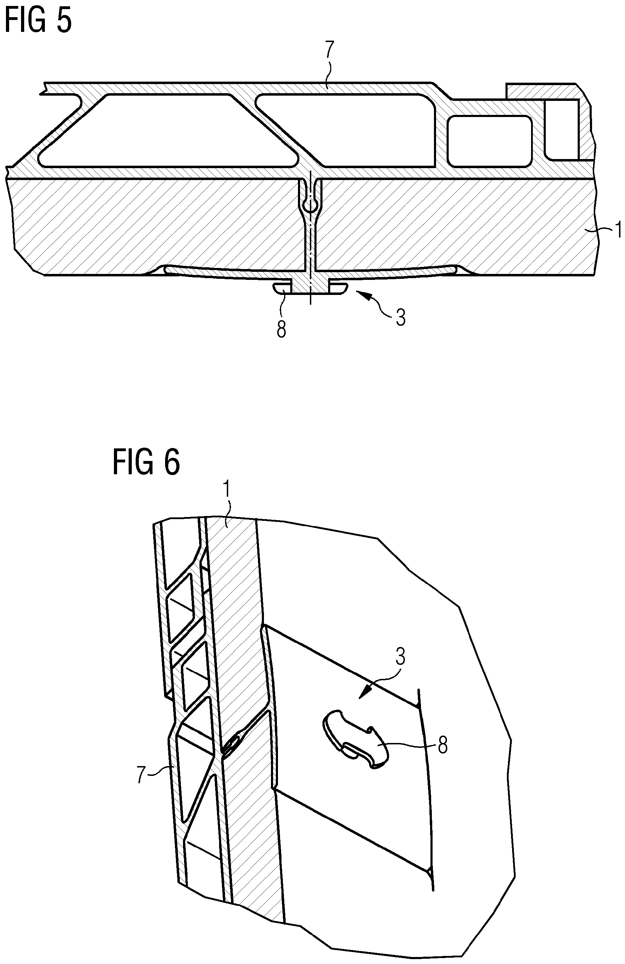

**Fig.5** zeigt beispielhaft und schematisch eine Befestigung einer Isolierung mittels einer I-förmige Ausformung in einer Schnittdarstellung. Es ist eine Befestigung einer Isolierung 1 an einem Leichtmetall-Strangpreßprofil 7 mit eine Ausformung 2 mit I-förmigen Querschnitt gezeigt, welche auch mit einer Schnurhalterung 8 ausgestattet ist.

**Fig.6** zeigt beispielhaft und schematisch eine Befestigung einer Isolierung mittels einer I-förmige Ausformung in einer Schrägansicht. Es ist die Befestigung aus Fig.5 in einer Schrägansicht dargestellt, Dabei ist die Ausdehnung der Isolierungshalterung 3 gut erkennbar, welche in dieser Ausprägung als Extrusionsbauteil geformt ist.

### Liste der Bezeichnungen

- 1: Isolierschicht
- 2: Ausformung
- 3: Isolierungshalterung
- 4: Klemmteil
- 5: Halteteil
- 6: Abstandsteil
- 7: Leichtmetall-Strangpreßprofil
- 8: Schnurhalterung
- 9: Sollbruchstelle

## Patentansprüche

1. Befestigung für eine thermische Isolierschicht (1) im Innenraum eines Schienenfahrzeugs in Integralbauweise, umfassend mindestens eine, in Richtung des Innenraums des Schienenfahrzeugs orientierbare, geradlinige Ausformung (2) und eine mit der Ausformung in formschlüssigen Eingriff bringbare Isolierungshalterung (3), wobei die Isolierungshalterung (3) einen Klemmteil (4) zum formschlüssigen Eingriff in die Ausformung (2) und einen Halteteil (5) zur Verteilung der Klemmkraft auf die Isolierschicht (1) umfasst, wobei zwischen dem Klemmteil (4) und dem Halteteil (5) ein Abstandsteil (6) angeordnet ist.
**dadurch gekennzeichnet, dass**
der Halteteil (5) der Isolierungshalterung (3) vier Arme aufweist, welche von dem Abstandsteil (6) ausgehen und an ihrem Ende je mit einer Platte ausgestattet sind und wenigstens einer der Arme des Halteteils (5) mit einer Sollbruchstelle zur Abtrennung dieses Armes von der Isolierungshalterung (3) ausgestattet ist.

2. Befestigung für eine thermische Isolierschicht (1) nach Anspruch 1,
**dadurch gekennzeichnet, dass** die Ausformung (2) einstückig mit einem Leichtmetall-Strangpreßprofil (7) des Wagenkastens des Schienenfahrzeugs formbar ist.

3. Befestigung für eine thermische Isolierschicht (1) nach Anspruch 2,
**dadurch gekennzeichnet, dass** die Ausformung (2) als C-Schiene ausgebildet ist.

4. Befestigung für eine thermische Isolierschicht (1) nach Anspruch 2,
**dadurch gekennzeichnet, dass** die Ausformung (2) einen I-förmigen Querschnitt mit einer Einkerbung aufweist.

5. Befestigung für eine thermische Isolierschicht (1) nach Anspruch einem der Ansprüche 1 bis 4,
**dadurch gekennzeichnet, dass** die Isolierungshalterung (3) einstückig aus Kunststoff hergestellt ist.

6. Befestigung für eine thermische Isolierschicht (1) nach einem der Ansprüche 1 bis 4,
**dadurch gekennzeichnet, dass** die Isolierungshalterung (3) aus Kunststoff hergestellt ist, wobei der Abstandsteil (6) in einen ersten und einen zweiten Abschnitt geteilt ist und eine Rastung zwischen dem ersten und dem zweiten Abschnitt eingefügt ist, welche das variable Einstellen der Länge des Abstandsteils (6) erlaubt.

7. Isolierungshalterung (3) für den Einsatz in einer Befestigung für eine thermische Isolierschicht nach einem der Ansprüche 1 bis 6, wobei die Isolierungshalterung (3) einen Klemmteil zum formschlüssigen Eingriff in eine Ausformung (2) und einen Halteteil (5) zur Verteilung der Klemmkraft auf die Isolierschicht (1) umfasst, wobei zwischen dem Klemmteil (4) und dem Halteteil (5) ein Abstandsteil (6) angeordnet ist
**dadurch gekennzeichnet, dass** der Halteteil (5) der Isolierungshalterung (3) vier Arme aufweist, welche von dem Abstandsteil (6) ausgehen und an ihrem Ende je mit einer Platte ausgestattet sind, wobei wenigstens einer der Arme des Halteteils (5) mit einer Sollbruchstelle zur Abtrennung dieses Armes von der Isolierungshalterung (3) ausgestattet ist.

8. Isolierungshalterung (3) nach Anspruch 7,
**dadurch gekennzeichnet, dass** die Isolierungshalterung (3) einstückig aus Kunststoff hergestellt ist.

9. Isolierungshalterung (3) nach Anspruch 7,
**dadurch gekennzeichnet, dass** die Isolierungshalterung (3) aus Kunststoff hergestellt ist, wobei der Abstandsteil (6) in einen ersten und einen zweiten Abschnitt geteilt ist und eine Rastung zwischen dem ersten und dem zweiten Abschnitt eingefügt ist, welche das variable Einstellen der Länge des Abstandsteils (6) erlaubt.

## Claims

1. Integral fastening for a thermal insulation layer (1) in the interior of a rail vehicle, comprising at least one straight moulding (2) which can be oriented in the direction of the interior of the rail vehicle and an insulation grip (3) which can engage in a form-fitting manner with the moulding, wherein the insulation grip (3) comprises a clamping part (4) for the form-fitting engagement into the moulding (2) and a retaining part (5) for distributing the clamping force onto the insulation layer (1), wherein a spacer part (6) is arranged between the clamping part (4) and the retaining part (5),
**characterised in that**
the retaining part (5) of the insulation grip (3) has four arms, which emanate from the spacer part (6) and are each equipped at their end with a plate, and at least one of the arms of the retaining part (5) is equipped with a predetermined break point for separating this arm from the insulation grip (3).

2. Fastening for a thermal insulation layer (1) according to claim 1,
**characterised in that** the moulding (2) can be moulded in one piece with a light metal extruded profile (7) of the body of the rail vehicle.

3. Fastening for a thermal insulation layer (1) according to claim 2,
**characterised in that** the moulding (2) is embodied as a C-rail.

4. Fastening for a thermal insulation layer (1) according to claim 2,
**characterised in that** the moulding (2) has an I-shaped cross-section with a notch.

5. Fastening for a thermal insulation layer (1) according to one of claims 1 to 4,
**characterised in that** the insulation grip (3) is manufactured in one piece from plastic.

6. Fastening for a thermal insulation layer (1) according to one of claims 1 to 4,
**characterised in that** the insulation grip (3) is manufactured from plastic, wherein the spacer part (6) is divided into a first and a second segment and a detent is inserted between the first and the second segment which permits the variable adjustment of the length of the spacer part (6).

7. Insulation grip (3) for the use in a fastening for a thermal insulation layer according to one of claims 1 to 6, wherein the insulation grip (3) comprises a clamping part for the form-fitting engagement into a moulding (2) and a retaining part (5) for distributing the clamping force onto the insulation layer (1), wherein a spacer part (6) is arranged between the clamping part (4) and the retaining part (5),
**characterised in that** the retaining part (5) of the insulation grip (3) has four arms, which emanate from the spacer part (6) and are each equipped at their end with a plate, wherein at least one of the arms of the retaining part (5) is equipped with a predetermined break point for separating this arm from the insulation grip (3).

8. Insulation grip (3) according to claim 7,
**characterised in that** the insulation grip (3) is manufactured in one piece from plastic.

9. Insulation grip (3) according to claim 7,
**characterised in that** the insulation grip (3) is manufactured from plastic, wherein the spacer part (6) is divided into a first and a second segment and a detent is inserted between the first and the second segment, which permits the variable adjustment of the length of the spacer part (6).

## Revendications

1. Fixation destinée à une couche d'isolation thermique (1) à l'intérieur d'un véhicule ferroviaire de construction monobloc, comprenant au moins une protubérance (2) rectiligne pouvant être orientée en direction de l'intérieur du véhicule ferroviaire et un support d'isolation (3) pouvant être mis en prise par complémentarité de forme avec la protubérance, dans laquelle le support d'isolation (3) comprend une partie de serrage (4) permettant une mise en prise par complémentarité de forme avec la protubérance (2) et une partie de retenue (5) permettant la répartition de la force de serrage sur la couche d'isolation (1), dans laquelle une partie d'espacement (6) est agencée entre la partie de serrage (4) et la partie de retenue (5),
**caractérisée en ce que**
la partie de retenue (5) du support d'isolation (3) présente quatre bras qui partent de la partie d'espacement (6) et sont équipés respectivement d'une plaque à leur extrémité et au moins un des bras de la partie de retenue (5) est équipé d'un point de rupture permettant de séparer ledit bras du support d'isolation (3).

2. Fixation destinée à une couche d'isolation thermique (1) selon la revendication 1,
**caractérisée en ce que** la protubérance (2) peut être formée d'un seul tenant avec un profilé extrudé en métal léger (7) de la caisse du véhicule ferroviaire.

3. Fixation destinée à une couche d'isolation thermique (1) selon la revendication 2,
**caractérisée en ce que** la protubérance (2) est réalisée sous la forme d'un rail en C.

4. Fixation destinée à une couche d'isolation thermique (1) selon la revendication 2,
**caractérisée en ce que** la protubérance (2) présente une section transversale en forme de I avec une encoche.

5. Fixation destinée à une couche d'isolation thermique (1) selon l'une quelconque des revendications 1 à 4,
**caractérisée en ce que** le support d'isolation (3) est fabriqué en plastique d'un seul tenant.

6. Fixation destinée à une couche d'isolation thermique (1) selon l'une quelconque des revendications 1 à 4,
**caractérisée en ce que** le support d'isolation (3) est fabriqué en plastique, dans laquelle la partie d'espacement (6) est divisée en des première et seconde sections et un cran est inséré entre les première et seconde sections, ce qui permet l'ajustement variable de la longueur de la partie d'espacement (6) .

7. Support d'isolation (3) destiné à être utilisé dans une fixation pour couche d'isolation thermique selon l'une quelconque des revendications 1 à 6, dans lequel le support d'isolation (3) comprend une partie de serrage, permettant une mise en prise par complémentarité de forme avec une protubérance (2), et une partie de retenue (5) permettant de répartir la force de serrage sur la couche d'isolation (1), dans lequel une partie d'espacement (6) est agencée entre la partie de serrage (4) et la partie de retenue (5),
**caractérisé en ce que** la partie de retenue (5) du support d'isolation (3) présente quatre bras qui partent de la partie d'espacement (6) et sont équipés respectivement d'une plaque à leur extrémité, dans lequel au moins un des bras de la partie de retenue (5) est équipé d'un point de rupture permettant de séparer ledit bras du support d'isolation (3).

8. Support d'isolation (3) selon la revendication 7,
**caractérisé en ce que** le support d'isolation (3) est fabriqué d'un seul tenant en plastique.

9. Support d'isolation (3) selon la revendication 7,
**caractérisé en ce que** le support d'isolation (3) est fabriqué en plastique, dans lequel la partie d'espacement (6) est divisée en des première et seconde sections et un cran est inséré entre les première et seconde sections, ce qui permet l'ajustement variable de la longueur de la partie d'espacement (6).
